Europäisches Patentamt

European Patent Office

Office européen des brevets

(19)

(11) Publication number: **0 223 751 B1**

# EUROPEAN PATENT SPECIFICATION

(12)

(45) Date of publication of patent specification: **09.10.91**

(51) Int. Cl.⁵: **G01F 23/16**, G01F 23/24, G01N 35/06, G01N 1/00

(21) Application number: **86830346.2**

(22) Date of filing: **17.11.86**

(54) **Liquid level sensor, used in an automatic station for preparing immunologic dosages.**

(30) Priority: **19.11.85 IT 4880485**

(43) Date of publication of application:
**27.05.87 Bulletin 87/22**

(45) Publication of the grant of the patent:
**09.10.91 Bulletin 91/41**

(84) Designated Contracting States:
**AT BE CH DE ES FR GB GR LI LU NL SE**

(56) References cited:
**DE-A- 2 655 303**
**GB-A- 844 010**

**PATENT ABSTRACTS OF JAPAN, vol. 8, no. 157 (P-288)[1594], 20th July 1984; & JP-A-59 52 759 (TERUMO K.K.) 27-03-1984**

**PATENT ABSTRACTS OF JAPAN, vol. 6, no. 51 (P-108)[929], 6th April 1982; & JP-A-56 164 958 (AROKA K.K.) 18-12-1981**

(73) Proprietor: **CHEMILA S.r.l.**
**Via Tiburtina Valeria Km. 18300**
**Setteville di Guidonia RomE(IT)**

(72) Inventor: **Prodosmo, Armando**
**Via Monte Epomeo, 21**
**I-00139 Rome(IT)**
Inventor: **Mazzacurati, Federico**
**Via Dupré, 8**
**I-00133 Rome(IT)**

(74) Representative: **Santostefano, Alfredo**
**c/o Studio Ing. C. Gregorj S.r.l. Via Sallustiana1/A**
**I-00187 Roma(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an automatic station for sucking in liquids from open containers, such as test tubes, and comprising
- a probe connected to a syringe, said probe having a downwardly extending tip and being lowerable into said containers, one at a time, under positive automatic control,
- a pressure sensor connected to said probe, and
- an automatically controlled valve to separate at least said syringe from said pressure sensor,

said pressure sensor supplying an electrical signal to a controller which, on the other hand, supplies a control signal to said valve.

Such an arrangement is known from JP-A-59 52759 in a form where the pressure sensor consists of an undefined transducer and the lowering of the probe is effected at a time when the syringe draws in air through the tip of the probe, the automatic valve then being opened. Thus, the moment is registered when the tip of the probe arrives at the free surface of the fluid contained in the respective container in order to initiate a fluid drawing operation under control of a timer.

Such stations may advantageously be used for preparing immunologic dosages. E.g. the determination for diagnostic purposes of substances present in the blood at very low concentrations, such as hormones, drugs, proteins etc., is possible nowadays by the use of immunologic dosage technologies (RIA, EIA etc.) with a very high sensitivity. The preparation of such dosages which requires incubation, in a single test tube, of several substances as e.g. unknown antigen, marked antigen and specific antibody, is carried out in several phases. One phase is the suction, from several containers or test tubes, of liquids containing the reagents and subsequently the dispensing of these liquids into test tubes where the reactions are to take place. These operations have previously been performed manually by an operator using dispensing pipettes. In recent years, within the scope of the automation process regarding all the phases of immunologic dosage preparation, computerized stations for the dispensing of dosage liquids have been developed.

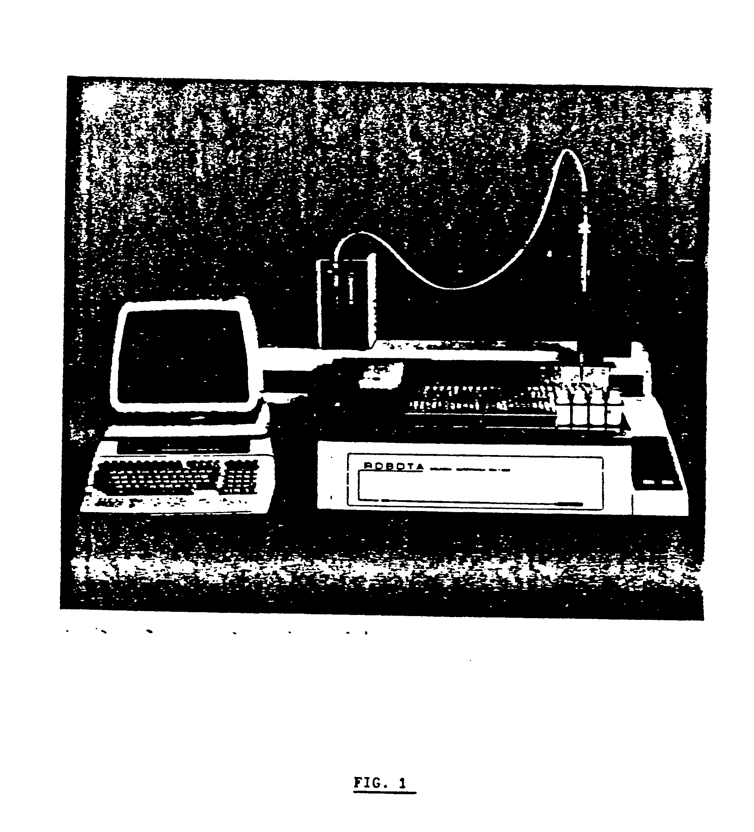

A typical automatic station of this kind as shown in Fig. 1 includes of a computer controlling the operation of a plotter for positioning a dispensing probe in X, Y and Z coordinates with respect to an operation surface carrying the dosage trays, and of a diluter connected to the probe for suctioning and dispensing the liquids. The diluter is normally made up by one or more syringes connected by means of flexible tubes to the probe. The suction and dispensing operations are carried out by moving the syringe piston up or down. The probe, usually called z-axis, has no fixed needle but uses tips which are automatically taken from a suitable tray and replaced after each dispensing operation so as to avoid any possible contamination. Usually, during operation of the preparing station, the probe collects several times from the same container or test tube well determined quantities of the liquid to be dispensed. Therefore, taking into account that the liquid quantity in the container decreases according to the number of withdrawals, it is necessary that the system should know before each suction the quantity of liquid available as compared with the required quantity. That is, it is necessary to know before withdrawing, the volume of liquid contained in the container. However, since the geometry of the container is known, it is sufficient to know one parameter only, namely the liquid level in the container. Principally, the previously described automatic station would be capable of performing this task though no such operation is mentioned in the reference. The respective arrangement would permit a computer to determine the level and, accordingly, the volume of the liquid contained in the respective container. If the quantity of liquid is sufficient to satisfy the request, the controller could, at this point, lower the tip with reference to the free surface of the liquid to a depth corresponding to the volume of the liquid to be withdrawn, thus to avoid lowering of the tip more than necessary.

The operation could be even more refined by performing, in subsequent steps, small immersions of the tip with alternate suctioning of small volumes of liquid until the total volume to be withdrawn has been reached, in this manner achieving that only a small portion of the tip is immersed in the liquid.

However, the pressure sensors that have previously been used in automatic stations of the kind described, for instance piezometric resistivity pressure transducers, are not very satisfactory due to their scarce sensitivity.

The invention as claimed aims to overcome this problem by providing, in an automatic station of the kind described, a pressure sensor comprising an upright U-pipe gauge containing water and an electric resistivity sensor at an open end of one branch of the U-pipe gauge, the other branch being connected to both the probe and syringe through the respective automatically controlled valve, said valve being open when said syringe is activated for expelling air, to sense the position of the level of the liquid to be sucked in, and being closed when said syringe is activated for sucking in liquid, and said resistivity sensor being activated to detect a resistivity change by a minimum pressure difference within the system when the probe tip touches the liquid level, this pressure difference bringing the water level in said one branch of said U-pipe gauge to reach the resistivity sensor.

In a preferred embodiment the lowering movement of the probe is interrupted immediately upon detection of a resistivity change by said resistivity sensor and the tip of the probe is exchangeable, preferably in an automatic manner.

With the U-pipe gauge used as the pressure sensor already a minimum pressure difference within the system results in a considerable displacement of the water column contained in the U-pipe if only the rate of the pressure change is high. This is the case when air slowly expelled through the tip of the probe is suddenly blocked by the probe touching the liquid surface.

Employing a U-pipe gauge for liquid level sensing is known from GB-A-344,010, the gauge including an electrode at one end. However, in this case the liquid contained in the gauge is mercury, this mercury performing a switching function with respect to the electrode, and the liquid level to be sensed is that one in a washing machine. In this case no dynamic effect is employed as it is obtained. where the outlet of a fluid is suddenly impeded and this is underlined by the fact that a throttled portion is purposely provided between both sides of the U-pipe gauge.

For better understanding, in the following, the invention is described more in detail taking reference to the drawings in which

Fig. 1

represents, as mentioned above, a typical automatic station for preparing immunologic dosages, in which station the invention may be employed,

Figures 2 and 3

show a theoretical solution of the problem of detecting a liquid level by means of a pressure switch, the arrangement being very similar to that one of the reference JP-A-59 52759,

Fig. 4

shows a U-pipe gauge including a resistivity sensor as it is used in the present invention, and

Figures 5 and 6

show an arrangement similar to that one of the Figures 2 and 3 yet employing a U-pipe gauge as shown in Fig. 4 as the pressure sensor.

The automatic station shown in Fig. 1 includes a computer which controls the operation of a plotter for positioning a dispensing probe with respect to a working surface containing the respective dosage trays, and a diluter connected to the probe for the suctioning and dispensing of the liquids.

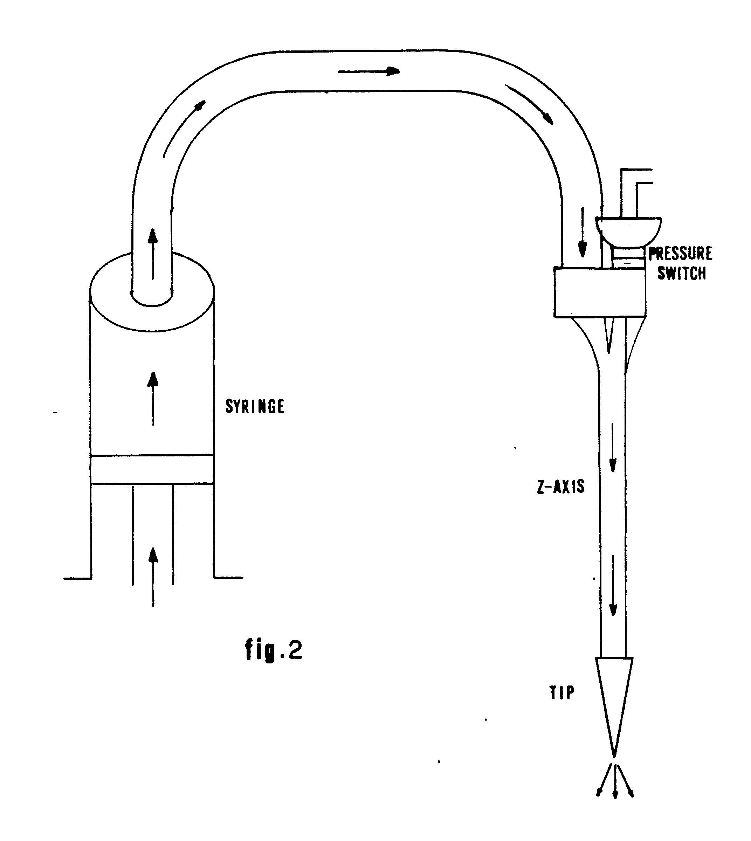

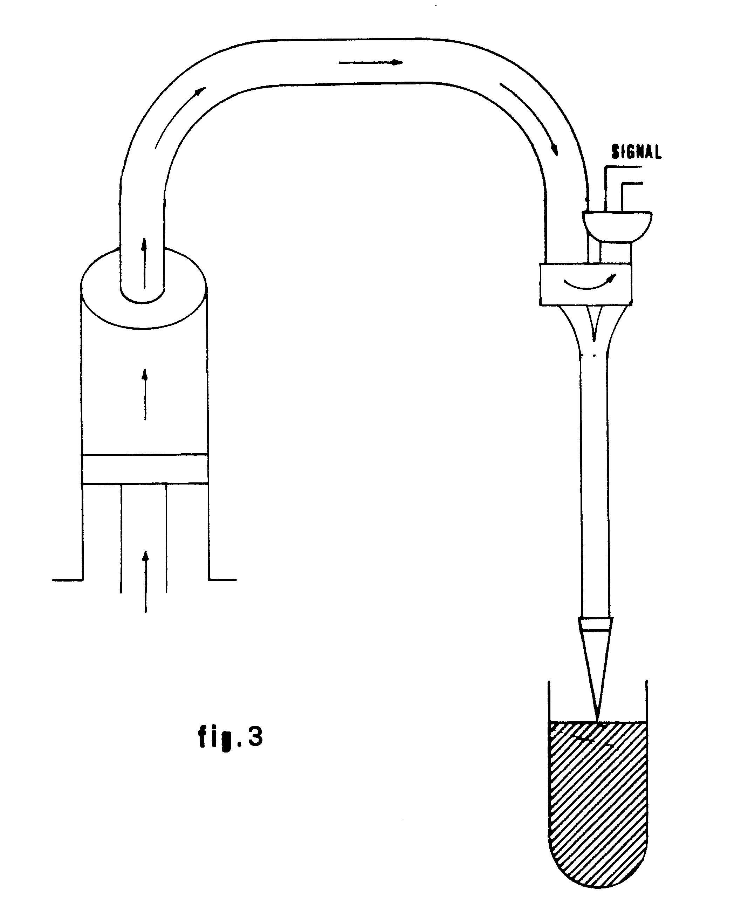

With regard to the theoretical solution of the Figures 2 and 3, Fig. 2 shows the situation wherein the tip of the probe or z-axis is not in contact with the liquid. In this state air is expelled through the orifice of the tip at a rate not to create any noticeable internal pressure therein.

Fig. 3 shows the situation wherein, during lowering of the probe, the tip comes into contact with the liquid surface in a container such as a test tube containing a reagent. In the moment the orifice is immersed an overpressure is created in the system. However, as mentioned above, sensitivity of any conventional pressure switch is too low for rendering any satisfactory results.

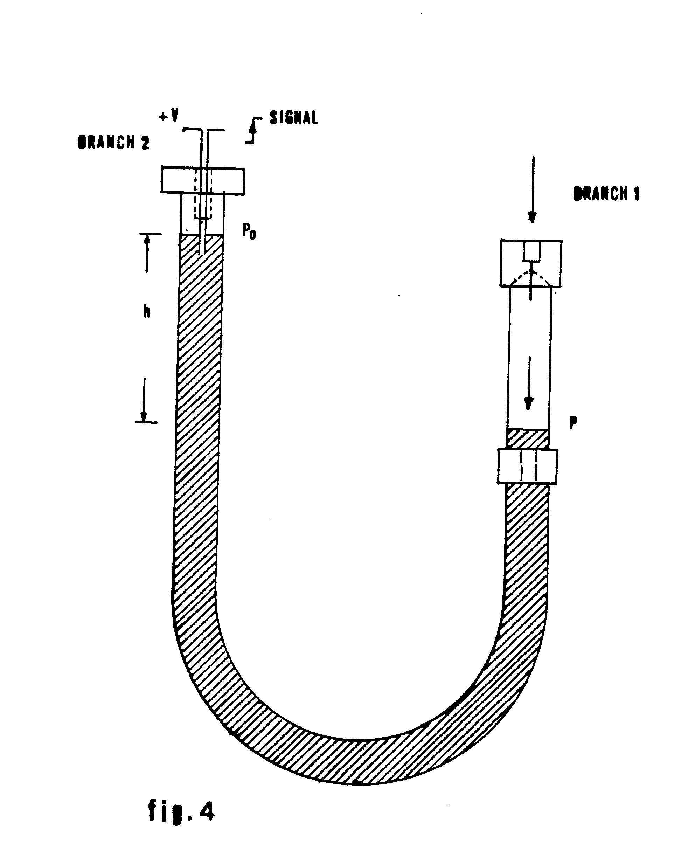

Fig. 4 shows a pressure sensor in the form of a U-pipe gauge as it is employed in accordance with the present invention. According to the law of communicating containers both free surfaces of the water column contained in the U-pipe, when under atmospheric pressure, are generally at the same level. Should, however, the pressure e.g. in branch 1 be increased, the water level in this branch is lowered whereas the water level in branch 2 is raised. Since a resistivity sensor is installed at the end of branch 2, should the quantity of water be kept within certain limits, the sensor contacts will then be reached by the water. If one of the two sensor contacts, as shown, is connected to a voltage source $V^+$, the respective voltage, due to the water conductivity, is transferred to the other sensor contact thus to create a signal which is supplied to the computer.

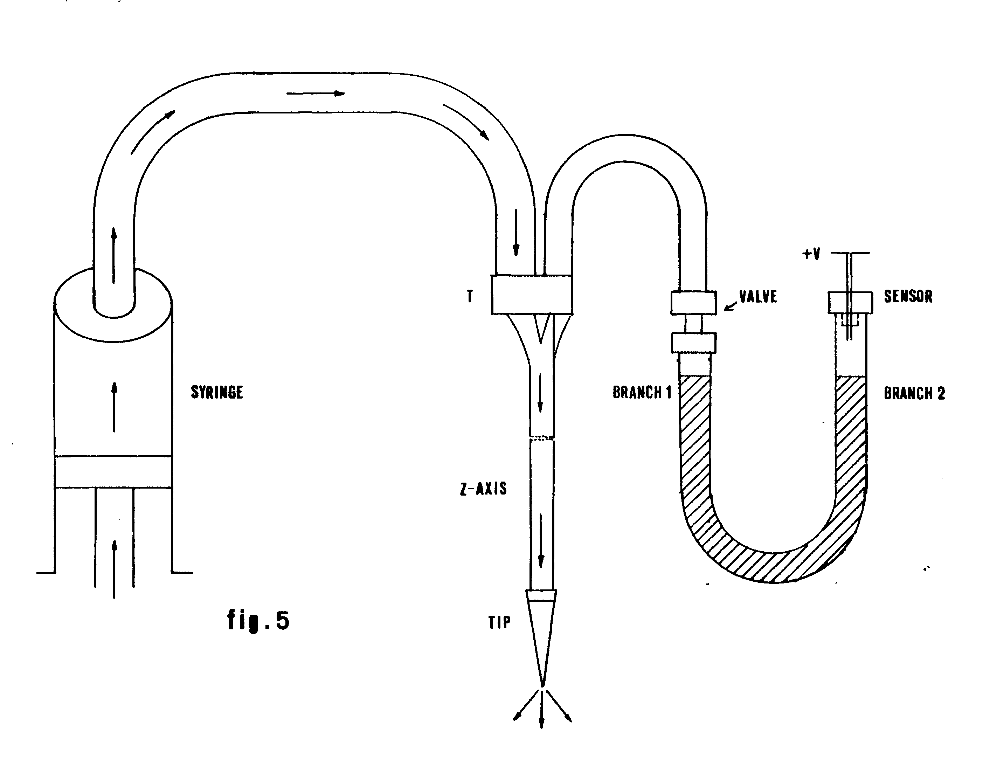

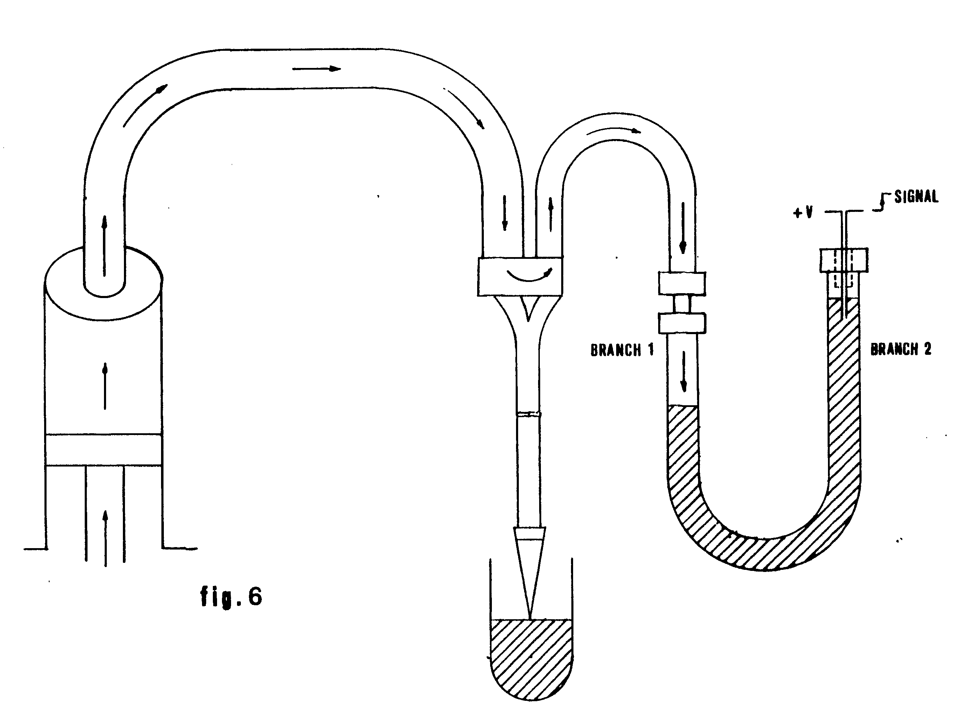

The so far described device, in accordance with the invention, is employed to detect the liquid level in a container by means of the arrangement shown in Figures 5 and 6.

In this arrangement the probe or z-axis of the preparing station is connected through a suitable T-member from one side to the diluter syringe and from the other side to branch 1 of the U-pipe gauge. By moving up the syringe piston a flow of air is obtained which may freely exit through the tip of the probe. Moreover, if the syringe piston comes up slowly enough, the air flow will not create any noticeable increase of pressure in the system.

However, as the tip comes into contact with the liquid free surface in the container, the airflow through the tip of the probe is suddenly impeded thus causing an immediate increase in pressure in the system. This pressure pulse is transmitted to the branch 1 of the U-pipe gauge causing there a quick displacement of the water column included in the gauge and the level increase in branch 2 thereof activates the resistivity sensor thus to supply an electric signal to the computer.

To keep the connection open only during the phase of level sensing, in other words: to avoid that otherwise water may be expelled or drawn from the U-pipe gauge, an electrically controlled valve is installed at the input of branch 1, this valve being automatically operated by the computer.

## Claims

1. An automatic station for sucking in liquids from open containers, such as test tubes, and comprising:
   - a probe connected to a syringe, said probe having a downwardly extending tip and being lowerable into said containers, one at a time, under positive automatic control,
   - a pressure sensor connected to said probe, and
   - an automatically controlled valve to separate at least said syringe from said pressure sensor,

   said pressure sensor supplying an electrical signal to a controller which, on the other hand, supplies a control signal to said valve, the aforementioned assembly being **characterized** in that said pressure sensor comprises an upright U-pipe gauge containing water, and an electric resistivity sensor at an open end of one branch of the U-pipe gauge, the other branch being connected to both said probe and syringe through said automatically controlled valve, said valve being open when said syringe is activated for expelling air, to sense the position of the level of the liquid to be sucked in, and being closed when said syringe is activated for sucking in liquid, and said resistivity sensor being activated to detect a resistivity change by a minimum pressure difference within the system when the probe tip touches the liquid level, this pressure difference bringing the water level in said one branch of said U-pipe gauge to reach the resistivity sensor.

2. The automatic station of claim 1 wherein control of the lowering movement of said probe is such that said lowering movement is interrupted immediately upon detection of a resistivity change by said resistivity sensor.

3. The automatic station of claim 1 or 2 wherein the tip of the probe is exchangeable, preferably automatically.

## Revendications

1. Station automatique pour aspirer des liquides hors de réservoirs ouverts tels que des éprouvettes, comprenant:
   - une sonde reliée à une seringue, la sonde ayant une pointe dirigée vers le bas et pouvant être abaissée dans les réservoirs, un à un, sous l'effet d'un contrôle positif automatique

   - un capteur de pression relié à la sonde et
   - une valve pilotée automatiquement pour séparer au moins la serinque du capteur de pression,

   le capteur de pression suppléant un signal électrique à un contrôleur qui, d'autrepart, supplée un signal de contrôle à la valve, l'assemblage mentionné ci-dessus étant <u>caractérisé</u> en ce que le capteur de <u>pression</u> comprend un tube-mesureur droit en forme de U contenant de l'eau et un capteur de résistance électrique à l'extremité ouverte d'une des branches du tube-mesureur en forme de U, l'autre branche étant reliée et à la sonde et à la seringue par la valve pilotée automatiquement, la valve étant ouverte lorsque la seringue est activée pour expulser de l'air afin de capter la position du niveau du liquide à aspirer, et fermée lorsque la seringue est activée pour aspirer le liquide, et le capteur de résistance étant activé pour indiquer un changement de résistance par un minimum de différence de pression dans le système lorsque la pointe de la sonde touche le niveau du liquide, cette différence de pression amenant le niveau de l'eau dans la dite une branche du tubemesureur en forme de U pour atteindre le capteur de résistance.

2. Station automatique selon la revendication 1 dans laquelle le contrôle du mouvement d'abaissement de la sonde est tel que ce mouvement d'abaissement est immédiatement interrompu lors d'une indication de changement de résistance par le capteur de résistance.

3. Station automatique selon la revendication 1 ou 2 dans laquelle la pointe de la sonde peut être changée, de préférence automatiquement.

## Patentansprüche

1. Automatische Station zum Einsaugen von Flüssigkeiten aus offenen Behältern, wie z.B. Proberöhrchen, mit:
   - einer mit einer Spritze verbundenen Sonde, die eine nach unten gerichtete Spitze aufweist und unter automatischer Steuerung in jeweils einen der Behälter absenkbar ist,
   - einem mit der Sonde verbundenen Drucksensor und
   - einem automatisch gesteuerten Ventil zum Trennen zumindest der Spritze von dem Drucksensor, wobei der Drucksensor ein elektrisches Signal an eine Steuerung liefert, die andererseits ein Steuersignal an das Ventil liefert, und wobei die vorgenannte Anordnung dadurch **gekennzeichnet**, daß der Drucksensor ein aufrechtstehendes, Wasser enthaltendes U-Rohr und einen elektrischen Widerstandssensor am offenen Ende eines Schenkels des U-Rohres aufweist, während der andere Schenkel über das automatisch gesteuerte Ventil sowohl mit der Sonde als auch der Spritze verbunden ist, wobei das Ventil beim Betätigen der Spritze zum Austreiben von Luft offen ist, um die Position des Spiegels der einzusaugenden Flüssigkeit festzustellen, und beim Betätigen der Spritze zum Einsaugen von Flüssigkeit geschlossen ist und der Widerstandssensor durch eine minimale Druckdifferenz innerhalb des Systems beim Auftreffen der Sonde auf den Flüssigkeitsspiegel betätigt wird, um eine Widerstandsänderung festzustellen, indem diese Druckdifferenz den Wasserspiegel in dem betreffenden Schenkel des U-Rohres dazu bringt, den Widerstandssensor zu erreichen.

2. Automatische Station nach Anspruch 1, worin die Steuerung der Absenkbewegung der Sonde so erfolgt, daß diese Absenkbewegung sogleich unterbrochen wird, nachdem durch den Widerstandssensor eine Widerstandsänderung festgestellt wurde.

3. Automatische Station nach Anspruch 1 oder 2, worin die Spitze der Sonde, vorzugsweise automatisch, auswechselbar ist.

FIG. 1

fig.2

fig.3

SIGNAL

fig. 4

fig. 5

EP 0 223 751 B1

fig. 6

SIGNAL

+V

BRANCH 1

BRANCH 2